**Europäisches Patentamt**

**European Patent Office**

**Office européen des brevets**

(19)

(11) Veröffentlichungsnummer: **0 128 533**
A2

(12) ## EUROPÄISCHE PATENTANMELDUNG

(21) Anmeldenummer: 84106505.5

(22) Anmeldetag: 07.06.84

(51) Int. Cl.³: **G 01 V 3/10, H 03 K 17/95**

(30) Priorität: 10.06.83 DE 3321003

(43) Veröffentlichungstag der Anmeldung: **19.12.84** Patentblatt 84/51

(84) Benannte Vertragsstaaten: **FR GB IT NL**

(71) Anmelder: **HONEYWELL EUROPE S.A., Avenue Henri Matisse 16, B-1140 Brüssel (BE)**

(72) Erfinder: **Lühr, Peter, Hainstrasse 45, D-6454 Bruchköbel (DE)**

(74) Vertreter: **Herzbach, Dieter et al, Honeywell Europe S.A. Holding KG Patent- und Lizenzabteilung Kaiserleistrasse 55 Postfach 184, D-6050 Offenbach am Main (DE)**

(54) **Induktiver Näherungsschalter.**

(57) Es wird ein Näherungsschalter angegeben, dessen Gehäuse (12) einen nach innen in den Luftspalt eines Schalenkernes (14) springenden Ansatz (26) aufweist. Der Ansatz (26) ist mit einer Gewinde-Sackbohrung (28) versehen, in die eine Schraube (30) aus ferromagnetischem Material mehr oder weniger tief eingeschraubt werden kann. Auf diese Weise läßt sich durch Eingriff von außen der Schaltabstand des Näherungsschalters einstellen.

HONEYWELL GmbH

Kaiserleistraße 55

6050 Offenbach am Main

6. Juni 1984

77300504 EP

Hz/ep

Induktiver Näherungsschalter

Die vorliegende Erfindung bezieht sich auf einen induktiven Näherungsschalter nach dem Gattungsbegriff des Anspruches 1. Bei derartigen Näherungsschaltern ist es oftmals erwünscht, in Abhängigkeit von dem Anwendungszweck des Näherungsschalters dessen Schaltabstand, d.h. den Abstand, bei dem er auf ein angenähertes Metallteil anspricht, zu verändern. Dies ist prinzipiell durch Veränderung der Oszillator-Kreisverstärkung möglich.

So ist es z.B. aus dem DE-GM 66 02 341 und der DE-OS 31 36 994 bekannt, über eine Einstellöffnung in dem Gehäuse des Näherungsschalters beispielsweise mit einem Schraubenzieher ein Potentiometer zu verstellen. Bestimmt dieses Potentiometer beispielsweise den Emitter- und somit den Gegenkopplungswiderstand des Oszillatorverstärkers, so kann auf den Verstärkungsfaktor V, d.h. auf die den Schaltabstand des Näherungsschalters vorgebende Kreisverstärkung K · V eingewirkt werden. Normalerweise ist die Schaltungsanordnung des Näherungsschalters mit Kunstharz vergossen, aber das Potentiometer muß im vorliegenden Fall zugänglich und verstellbar bleiben. Ein Potentiometer beinhaltet einen Berührungskontakt, durch den langfristig kein genauer Widerstandswert vorgegeben werden kann. Durch Erschütterungen und Korrosion an der Kontaktstelle kann sich der eingestellte Widerstandswert ändern.

Es ist ferner aus der DE-PS 31 37 928 bekannt, den Kopplungsfaktor K zu verändern, in dem man einen die Spule des Schwingkreises tragenden Schalenkern zweiteilig ausgestaltet, wobei ein pilzförmiges, die Spule tragendes inneres Kernstück in bezug auf ein äußeres rohrförmiges Kernstück axial verschiebbar ist. Durch die Zweiteiligkeit des Schalenkernes ergibt sich ein zusätzlicher Luftspalt, durch den die Güte des Schwingkreises verringert wird. Darüber hinaus kann wegen der notwendigen Verstellung hier ebenso wie bei dem eingangs genannten Stand der Technik nicht die komplette Schaltungsanordnung vergossen werden.

Schließlich ist aus der US-PS 3 743 853 ein induktiver Näherungsschalter bekannt, bei dem die Induktivität der den angenäherten metallischen Gegenstand erfassenden Spule durch ein von vorne in die zentrale Ausnehmung der Spule eingeführten Bolzen aus ferromagnetischem Material und somit der Schaltabstand des Näherungsschalters eingestellt wird. Nachdem der Schaltabstand des Näherungsschalters eingestellt ist, wird die Spule zusammen mit den anderen elektronischen Komponenten vergossen, so daß nachträglich eine Veränderung des Schaltabstandes nicht mehr möglich ist.

Ausgehend von den bekannten Näherungsschaltern ist es daher die Aufgabe der vorliegenden Erfindung, einen solchen Näherungsschalter so auszugestalten, daß auch bei einem vollständigen Verguß der Schaltungsanordnung eine Veränderung des Schaltabstandes möglich ist, ohne daß hierbei ein Eingriff in die eigentliche Schaltung erforderlich wäre. Die Lösung dieser Aufgabe gelingt gemäß den kennzeichnenden Merkmalen des Patentanspruches 1. Eine weitere vorteilhafte Ausgestaltung der Erfindung ist dem Unteranspruch entnehmbar.

Anhand eines in den Figuren der beiliegenden Zeichnung dargestellten Ausführungsbeispieles sei im folgenden die Erfindung näher beschrieben. Es zeigen:

Fig. 1 eine Draufsicht auf den teilweise aufgeschnittenen Näherungsschalter mit dem Betrachter zugekehrter Sensorfläche; und

Fig. 2 eine ebenfalls teilweise aufgeschnittene Seitenansicht des Näherungsschalters gemäß Fig. 1.

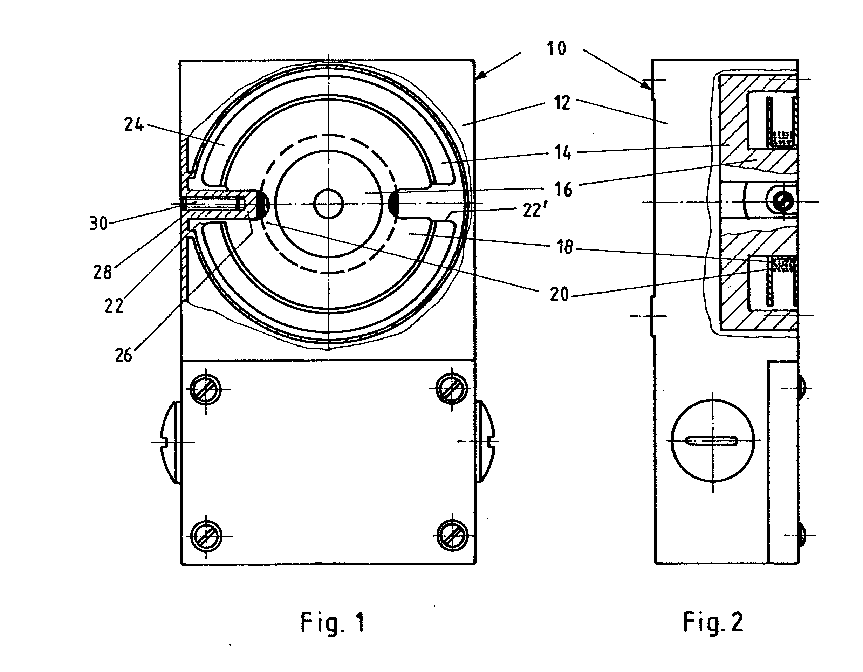

Gemäß den Figuren 1 und 2 besteht der induktive Näherungsschalter 10 aus einem quaderförmigen Kunstoffgehäuse 12, welches die elektronischen Bauteile des Näherungsschalters gießharzvergossen enthält. Die aktive Fläche des Näherungsschalters wird durch einen zu einer Fläche des Gehäuses 12 offenen Schalenkern 14 vorgegeben, über dessen zylindrischen Innenkern 16 ein Spulenträger 18 mit einer Wicklung 20 geschoben ist. Der Schalenkern 14 weist in seiner Topfwand 24 diametral gegenüberliegende Schlitze 22, 22' auf, die der Herausführung der Wicklungsenden dienen.

Das Gehäuse 12 besitzt einen nach innen, durch den Schlitz 22 in den Luftspalt des Schalenkerns 14 springenden Ansatz 26, der mit einer von außen zugänglichen Gewinde-Sackbohrung 28 versehen ist. In diese Gewinde-Sachbohrung 28 ist eine Schraube 30 aus Eisen mehr oder weniger tief eingeschraubt, wodurch sich der Abstand vorgeben läßt, in dem bei Annäherung eines metallischen Teiles der Näherungsschalter 10 anspricht.

Der Schalenkern 14 ebenso wie der die Wicklung 20 tragende Spulenkörper sind in Epoxydharz eingebettet, so daß die räumliche Zuordnung der Schraube 30 zu dem Luftspalt des Schalenkerns 14 durch Erschütterungen keine Änderung erfährt. Die Schwingkreisdämpfung und damit die Veränderung des Schaltabstandes ist lediglich von dem mehr oder weniger tiefen Einschrauben der Schraube 30 abhängig.

Patentansprüche:

1. Induktiver Näherungsschalter mit einem Oszillator, dessen Schwingkreis durch einen an eine Spule angenäherten metallischen Gegenstand bedämpfbar ist, wobei die Spule in einem nicht-metallischen Gehäuse angeordnet ist und einen zu einer Sensorfläche offenen, eine Spulenwicklung tragenden, Schalenkern aufweist, und mit einem verstellbaren mit der Spule zusammenwirkenden ferromagnetischen Element zur Einstellung der Spuleninduktivität und somit des Schaltabstandes des Näherungsschalters, d a - d u r c h   g e k e n n z e i c h n e t , daß das Gehäuse (12) einen angeformten nach innen springenden und in einen Schlitz (20) in dem Mantel (24) des Schalenkernes (14) greifenden Ansatz mit einer von außen zugänglichen Sackbohrung (28) aufweist, in die das ferromagnetische Element (30) eingesetzt ist.

2. Näherungsschalter nach Anspruch 1, d a d u r c h   g e k e n n z e i c h n e t , daß die Sackbohrung (28) mit einem Gewinde versehen ist und daß das ferromagnetische Element aus einer Eisenschraube (30) besteht.

Fig.2

Fig. 1